# EUROPEAN PATENT APPLICATION

(11) **EP 1 308 331 A1**
(43) Date of publication of application: **07.05.2003**
(21) Application number: 01126277.1
(22) Date of filing: 06.11.2001
(51) Int. Cl.: B60J 5/10, B60R 5/04

(54) **Hatchback door for motor-vehicles with at least two operational positions**

(71) Applicant: Di Camillo, Dario, 10024 Moncalieri (TO) (IT)
(72) Inventor: Di Camillo, Dario, 10024 Moncalieri (TO) (IT)
(74) Representative: Di Francesco, Gianni

(57) **Abstract**

Hatchback door (2) for motor-vehicle that can be fixed in two closed positions, a high closed position and a low closed position, it can be opened completely upwards from said high closed position, its shape is that of an overturned basin and it consists of an upper wall (4, 46), a rear wall (5, 45) and two side walls (6, 44) connected the one to the other.

## Description

The present invention refers to a hatchback door for motor-vehicles, the peculiarity of which is that of being used in at least two positions that allow to vary the inner overall volume of the motor-vehicle, more in particular the volume of the rear part.

Hatchback doors in general present several opening systems, quite often consisting of two parts or partial windows. An example of an hatchback door of this type is given in the European Application EP-A-0 159 017.

However, no hatchback door is known that allows to be fixed in different positions while the motor-vehicle is moving, in order to increase the volume in the rear compartment and thus make it possible to load bulks of large size as well as to add additional seats and to modify the profile of the vehicle so that it assumes different aspects.

It is an object of the present invention to provide an hatchback door that allows to achieve the aforementioned effects overcoming the drawbacks of the known art.

Said object is achieved by means of an hatchback door presenting the characteristics set forth in claim 1.

Additional characteristics and advantages will become clear from the following description referring to the appended figures provided as non restrictive example only, and in which:
figure 1 is a perspective top view of a motor-vehicle provided with the hatchback door according to the invention;
figures 2 to 4 are perspective top views of different types of motor-vehicles provided with the hatchback door according to the invention;
figure 5 is a side section view of the embodiment of the hatchback door in figure 1, the continuous line representing both the low closed position and the open position, while the short dashes line represents the high closed position;
figure 6 is an enlargement of the rear part of the hatchback in figure 5;
figure 7 is an enlargement of the point where the hatchback door of figure 5 is connected to the upper bodywork;
figure 8 is an enlargement of the section of the side wall of the hatchback door in figure 5;
figure 9 is a side section view of a second embodiment of the hatchback according to the invention, schematically represented by a continuous line in its low close position, and its open position, while the short dashes line represents the high close position;
figure 10 is an enlargement of the rear part of the hatchback door in figure 9;
figure 11 is an enlargement of the point of connection to the upper bodywork of the hatchback door in figure 9;
figure 12 is an enlargement of the section of the side wall of the hatchback door in figure 9;
figure 13 is a perspective top view of an additional embodiment of the hatchback door according to the invention, with two concentric frames;
figure 14 is a transparent perspective top view of the embodiment of figure 13 of the hatchback door of the invention;
figure 15 is a section view along the line X-X of figure 13, and
figure 16 is a section view along the line XI-XI of figure 13.

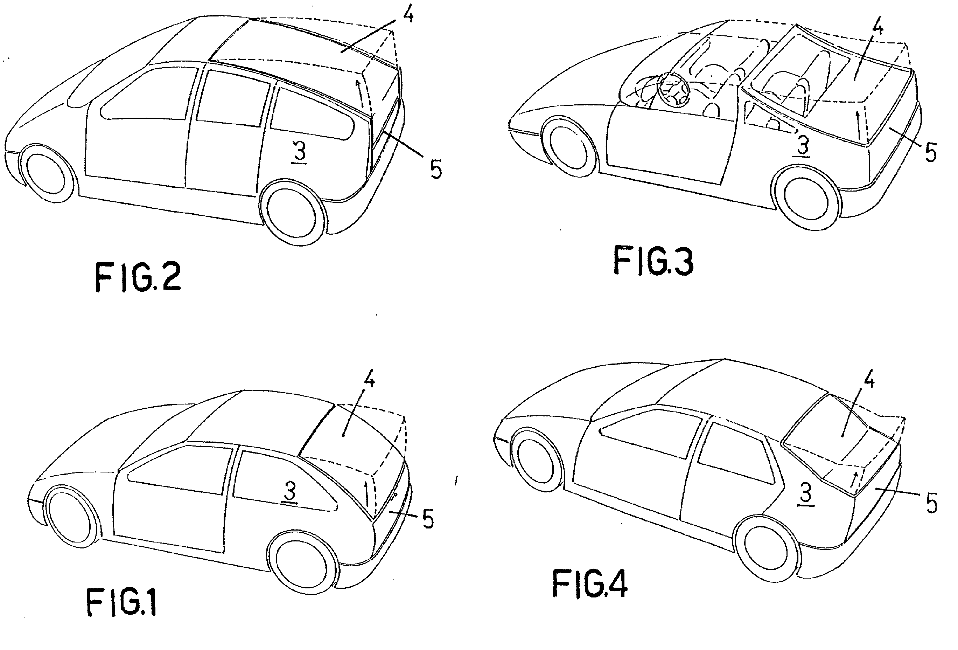

With reference to the figures, and more in particular to figure 1, reference number 2 indicates a motor-vehicle provided with a hatchback door that, when in use, can present two closed positions and one open position. Of the two closed positions, a low one is sketched by means of a continuous line while the high one is sketched by means of a short dashes line. Both positions can be kept indefinitely and allow a significant modification of the volume of the rear compartment so that it can be used in different ways. Besides, the outer profile of the motor vehicle is varied modifying the air penetration coefficient. Said type of hatchback door can be used for different types of motor vehicles such as those represented in figures 1 to 4, as well as on other types of vehicles such as trucks, boats and so on, without going beyond the limits of the present invention.

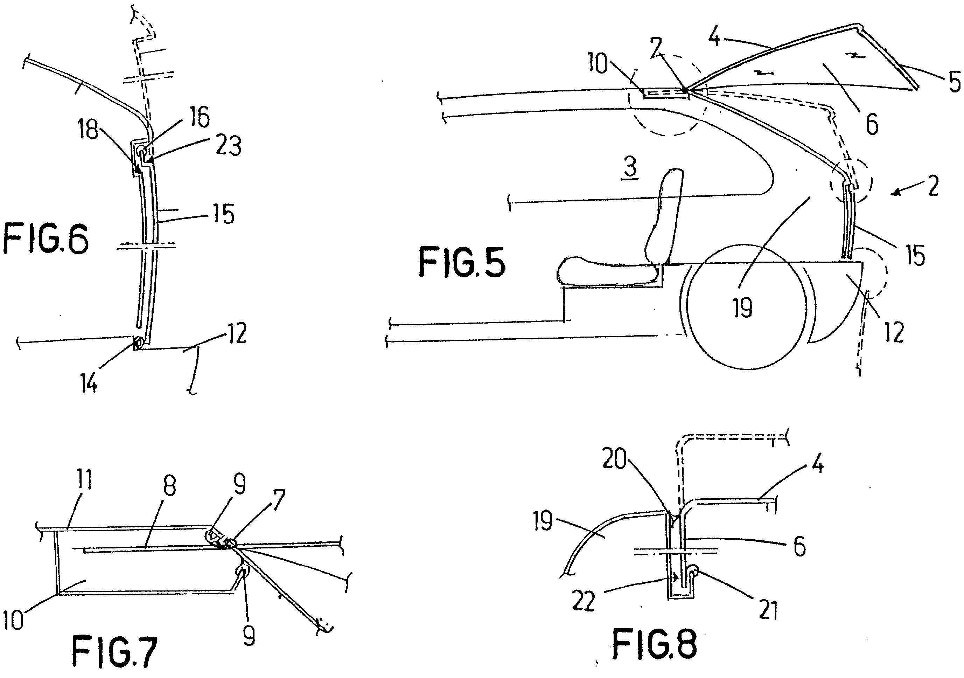

With reference to figures 5 to 8, a preferred embodiment of the hatchback door according to the invention is described in the following. Figure 5 shows a hatchback door 2 on a vehicle 3 represented in its three positions of use, that is the low closed position, the high closed position and the open position. The hatchback door 2 presents the form of an overturned basin the upper wall 4 being provided with a glass mounted on gaskets (not shown), a rear wall 5, which in the case shown is a fixed wall, and two side walls 6, of triangular shape, which are also fixed. The hatchback door 2 is hinged at its upper part 7 to a wall 8 slidingly inserted, with adequate gaskets 9, into a space 10 (figure 7) made at the roof 11 of the vehicle all along its whole length. On the rear part of the vehicle, at the bumper 12, there is hinged 14 a collapsible door 15 that can be closed, with adequate gaskets 16, on the rear wall 5 of the hatchback door 2, in an indented space 18 made at the junction point between the upper wall 4 and the rear wall 5. The body sides 19 of the vehicle will of course have lockers of the known type on them in order to close the door, as well as sliding gaskets 20 and 21 (figure 8) located on the body side in spaces 22 of U-shaped transversal section, in order to guarantee the tightness between the body side itself and the side walls 6 of the hatchback door when it moves from one position to the other or it is fixed in one of said positions. The door 15 is also provided at its upper edge with a space 23 against which lays the hatchback door 2 when it is in its high closed position.

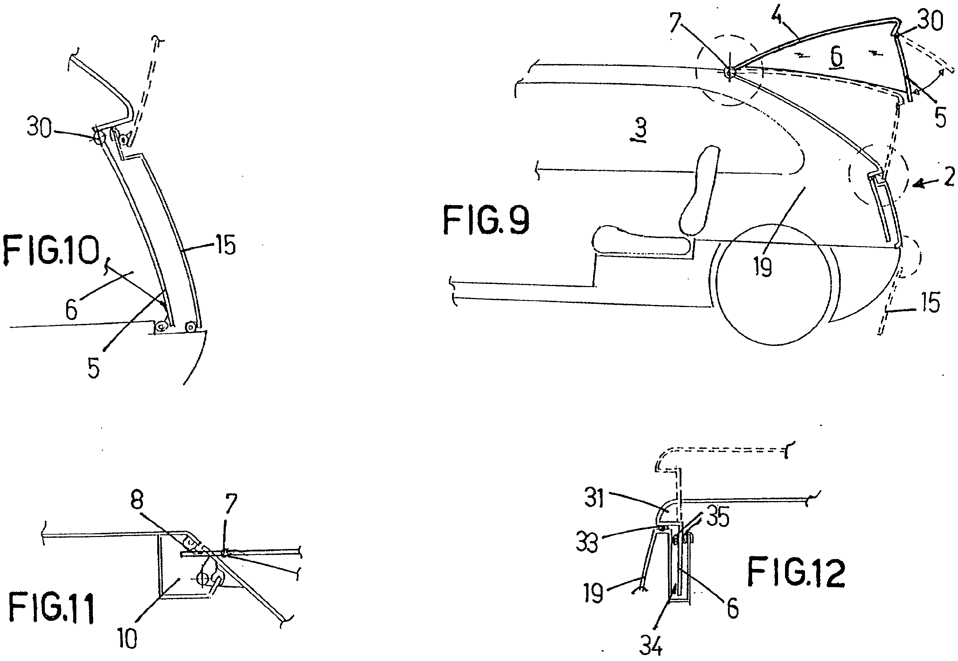

Figures 9 to 12 show a second preferred embodiment of the invention in which the rear part 5 of the hatchback door 2 is hinged 30 to the upper wall 4, and is adapted to be rabbet closed against the facing edges of the side walls 6 provided with watertight gaskets.

In this embodiment the edge of the upper wall 4 of the hatchback door 2 creates a projection 31 on the side walls 6 (figure 12). Said projection is provided with a watertight gasket 33 and is adapted to rabbet against the body side 19 of the motor vehicle, forming a seat 34 of U-shaped transversal section in which the two side walls 6 slide between gaskets 35 when the hatchback door moves from one closed position to the other.

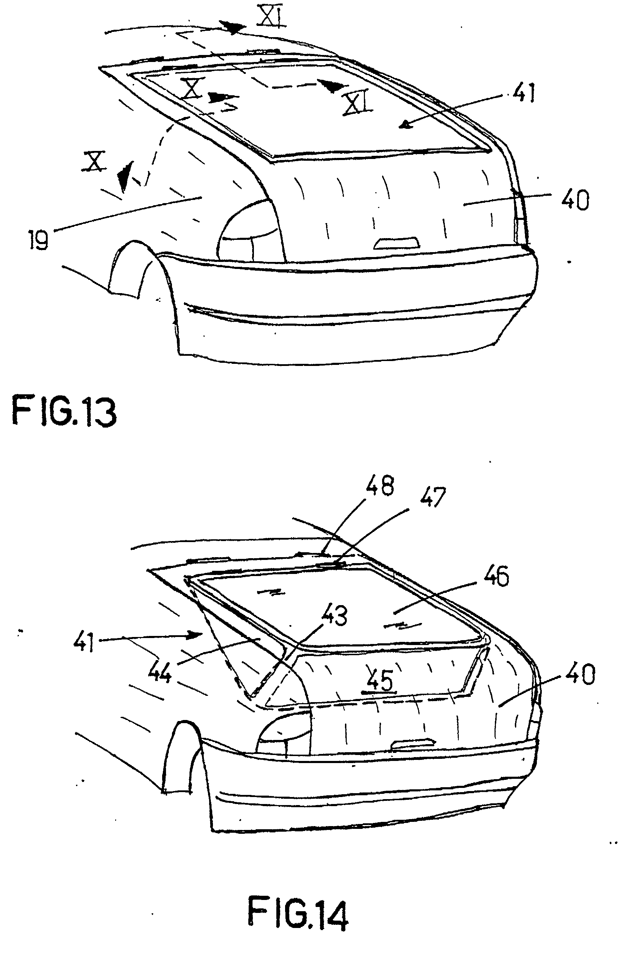

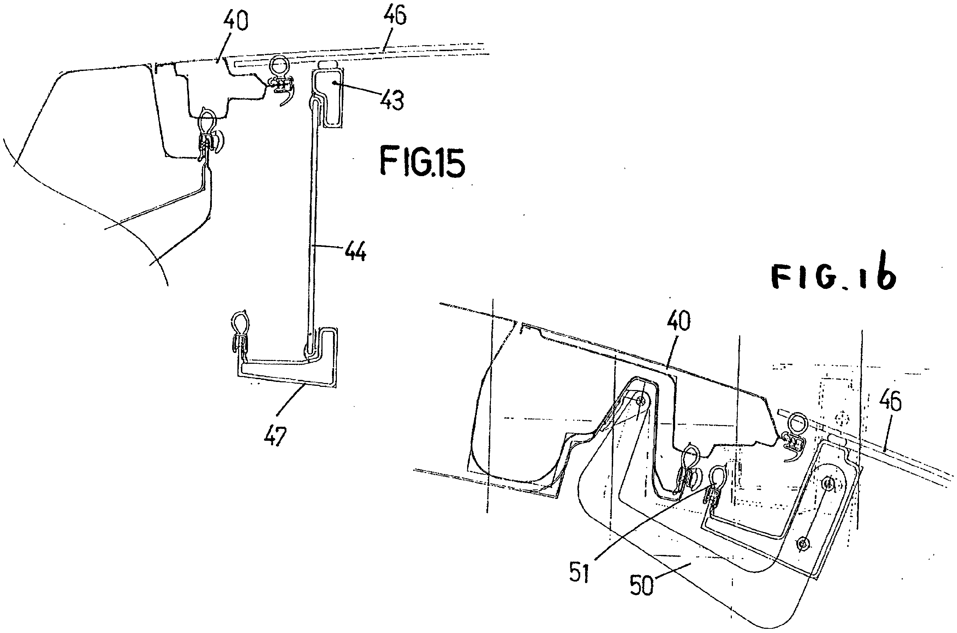

With reference especially to figures 13 to 16 it is now described a third preferred embodiment of the hatchback door according to the invention. Same parts of structures already described are indicated by the same reference numbers. The hatchback door indicated by number 40 in figures 14 and 15 is a common main hatchback door for motor vehicles on which a secondary door 41 has been inserted the structure of which is transparently shown in figure 14 and basically corresponds the one described with reference to the hatchback door of the first embodiment (figure 5) and transparently shown in figure 14. Therefore it includes a frame 43 to which there are connected the side walls 44, the side walls being preferably made of plate, a rear wall 45 and an upper wall 46, preferably made of glass. The upper part of the frame 43 is hinged at 47 to the bodywork to which, in turn, the main door 40 of the motor-vehicle is hinged. A possible embodiment of the hinge 47 is shown in figure 16, and includes a U-shaped arm 50 with watertight gaskets 51 which enter into contact with the structure of the door 40 when the secondary door 41 is in its lifted position, thus increasing the volume of the rear compartment. The side walls and the rear wall, are provided, at their lower edge, with a small frame 47 extending outside (figure 15) and with a watertight gasket 49 adapted to rabbet against the structure of the main door 40 when the secondary door 41 is in its lifted position. Locks and handles of the known type will be used also in this embodiment so that the secondary door can be locked in its to operational positions.

## Claims

1. Hatchback door for motor-vehicle **characterised in that** it can be fixed in two closed positions, a high closed position and a low closed position, it can be opened completely upwards from said high closed position, its shape is that of an overturned basin and it consists of an upper wall (4, 46), a rear wall (5, 45) and two side walls (6, 44) connected the one to the other.

2. Hatchback door as claimed in claim 1, **characterised in that** the rear door (5) is hinged to the upper wall (4).

3. Hatchback door as claimed in claim 1, **characterised in that** in front of the rear wall there is a collapsible door (15) hinged (14) at its upper part to the bumper of the motor-vehicle.

4. Hatchback door as claimed in claim 1 and 3, **characterised in that** at the point of connection between the rear wall (5) and the upper wall (4) there is a space (18) intended to house the upper edge of the door (15) provided with a gasket (16).

5. Hatchback door as claimed in claim 1 and 3, **characterised in that** the upper edge of the door (15) presents a space (23) intended to house the lower edge of the rear wall (5) of the hatchback door (2) when it is in its high closed position.

6. Hatchback door as claimed in claim 1, **characterised in that** the upper wall (4) is hinged (7) to a retaining wall (8) slidingly inserted into a space (10) made at the roof (11) of the vehicle all along its length.

7. Hatchback door as claimed in claim 1, **characterised in that** the side walls (6) of the hatchback door are slidingly housed by means of watertight gaskets (20, 21, 35) into spaces of U-shaped transversal section (22, 34) made on the side bodies (19) of the vehicle.

8. Hatchback door as claimed in claim 1, **characterised in that** the upper wall forms a projection (31) external to the side walls.

9. Hatchback door as claimed in claim 1, **characterised in that** it is a secondary door (41) inserted into a main door (40) of the known type.

10. Hatchback door as claimed in claim 9, **characterised in that** the secondary door (41) is provided with a perimetric frame (43) to which the side walls (44) and the rear wall (45) are hinged.

11. Hatchback door as claimed in claim 9, **characterised in that** the secondary door (41) is hinged to the bodywork of the motor-vehicle.

12. Hatchback door as claimed in claim 9 and 10, **characterised in that** the lower edge of the side walls (44) and of the rear wall (45) of the secondary door (41) is provided with a small frame (47) extending outwards and with a watertight gasket (49) adapted to rabbet against the structure of the main door (40).
